# EUROPEAN PATENT SPECIFICATION

(11) **EP 3 452 375 B1**
(45) Date of publication and mention of the grant of the patent: **25.12.2019**
(21) Application number: 17726992.5
(22) Date of filing: 20.04.2017
(51) Int. Cl.: B65B 37/08, G01G 13/02

(54) **A DOSING AND FILLING DEVICE FOR MULTI- HEAD MACHINES FOR WEIGHING AND DOSING OF FOOD PRODUCTS, OR THE LIKE, TO BE PACKAGED**
DOSIER- UND FÜLLVORRICHTUNG FÜR MEHRKOPFMASCHINEN ZUM WIEGEN UND DOSIEREN VON ZU VERPACKENDEN LEBENSMITTELPRODUKTEN ODER DERGLEICHEN
DISPOSITIF DE DOSAGE ET DE REMPLISSAGE POUR MACHINES À TÊTES MULTIPLES POUR LE PESAGE ET LE DOSAGE DE PRODUITS ALIMENTAIRES, OU SIMILAIRES, À EMBALLER

(30) Priority: 06.05.2016 IT UA20163221
(43) Date of publication of application: 13.03.2019
(73) Proprietor: MBP S.r.l., 46043 Castiglione delle Stiviere (MN) (IT)
(72) Inventor: FIORAVANTI, Andrea, 46043 Castiglione Delle Stiviere (MN) (IT); PAVAN, Marco, 46043 Castiglione Delle Stiviere (MN) (IT)
(74) Representative: Sandri, Sandro
(86) International application number: PCT/IB2017/052274
(87) International publication number: WO 2017/191520

(56) References cited:
- DE-C1- 4 335 074
- US-A1- 2009 277 692

## Description

### FIELD OF APPLICATION

The present invention relates to a filling device for multi-head machines for the weighing and dosing of food products, or the like, to be packaged.

More particularly, the present invention relates to a filling device of buckets for multi-head weighing machines which, in general, allows this type of dosing device to be used with products that are normally difficult to dose.

The device according to the invention substantially envisages the use of a rotating disc on which blades are applied which, as necessary, push the product into the weighing buckets.

The present invention can be applied in the field of automatic dosing and weighing equipment, in particular for multi-head weighing machines used for dosing the right amount of product during the step of filling the packages produced by packaging machines.

The present invention is advantageously applied in the sector of packaging machines for products of various types and mainly food products.

### PRIOR ART

It is known that in the sector of weighing and dosing food products or the like, automatic machines are used, known as multi-head weighing machines, intended to dose the right amount of product into the machines below, which are generally called vertical packaging machines, horizontal packaging machines, heat sealers and heat formers, or the like.

Such machines, together with multi-head dosers, are used at high production speeds for making packages of various kinds for sale in large scale retail and in supermarkets.

To perform these operations, traditional multi-head dosers provide for the use of a central vibrating plate placed in the upper part of the machine which receives the loose product coming from the line upstream and sees to distributing it through a multitude of vibrating channels starting from the central sector to the peripheral one, in the respective weighing and dosing heads, which are in turn placed according to a substantially circular arrangement on various levels from the top downwards.

More precisely, the loose product is distributed towards a multitude of vibrating channels in the peripheral sector, so that a certain amount of product can be conveyed into the top part of the respective dosing head, which is formed by a mechanically openable container known as the pre-dosing bucket placed in the upper part.

In turn, the contents of the pre-dosing bucket are poured into the bottom part of the dosing head through the opening of suitable doors, whose head is also formed by a mechanically openable container known as the weighing bucket.

The weighing bucket, according to the configurations, can unload the contents into another container known as the memory bucket or directly into the slides for conveying the weighed product towards the machine below for packaging.

The dosing and packaging system of the machine for unloading the right amount of product into the machine below, weighs the product previously unloaded into the weighing drums during the filling of the pre-dosing drums by the vibrating channels. All these weight values are processed by a central unit which, through a calculation of the possible combinations, identifies which are the buckets that by summing the weight contained therein and opened simultaneously can form exactly the right dose required for filling the package produced by the machine below.

These multi-head dosers together with the packaging machines below already in themselves allow the production processes to be automated for creating packaged and sealed bags of food products or the like for large scale retail in supermarkets, which were in the past performed manually.

The problem encountered with the use of such traditional means for moving the product to be packaged, consists of the limit determined by the capacity of the vibrating channels to transport these types of materials towards the dosing and weighing members.

In fact, with certain types of products characterised by a notable internal elasticity and glueyness, such as raw meat, fish, soft cheeses or the like, the technology of the high frequency oscillating planes used in the vibrating channels cannot be used due to the viscosity of these foods.

Therefore, it is impossible to dose the right amount of high viscosity product into the buckets described above, with the consequence that these types of machines cannot be used for weighing and dosing these foods.

Document US 2009/277692 A1 discloses a filling device having the features disclosed in the preamble of claim 1.

### DESCRIPTION OF THE INVENTION

The present invention sets out to provide a multi-head weighing and dosing machine, able to eliminate or at least reduce the drawbacks highlighted above.

The invention further sets out to provide a weighing and dosing machine having a simple design and realisation and that simultaneously allows the speed and high productivity requirements of the market to be satisfied also with products characterised by notable internal elasticity and glueyness, or stickiness, such as raw meat, fish, soft cheeses, or other similar products.

This is obtained through a multi-head weighing and dosing machine of the above mentioned type and having the features disclosed in the characterising portion of claim 1.

The dependent claims of the present solution delineate advantageous embodiments of the invention.

The main advantages of this solution, as well as those deriving from the construction simplicity, firstly regard the possibility to be able to dose products of various kinds into the buckets of the heads, which it is not normally possible to treat with this kind of machine.

Another advantage of the present invention, in one of the envisaged configurations, is to be able to perform, in addition to the weight dosing, also the selection and dosing of pieces of various kinds regardless of the dimensions and volume of the individual object for weighing.

According to the invention, a multitude of dosing heads are positioned in a circular fashion outside a large rotatable plate, the latter, during normal production, rotating at low speed.

Above the rotatable plate, a frame is provided which is firmly anchored to the framework of the machine which supports the mechanical linkages to allow the movement of a plurality of blades, each of which is positioned at a respective dosing head.

At the appropriate time, such blades are driven and their movement pushes the product, in this case also products characterised by notable internal elasticity and glueyness, or stickiness, positioned on the rotatable plate at the respective weighing heads inside the corresponding containment bucket.

### ILLUSTRATION OF THE DRAWINGS

Further characteristics and advantages of the invention will be evident from reading the following description of an embodiment of the invention by way of non-limiting example with the aid of the figures illustrated in the appended tables of drawings, in which:
- figure 1 represents a schematic view from above highlighting a dosing machine provided with the blade dosing system according to the invention;
- figure 2 illustrates a schematic and perspective view highlighting the detail of the blade driving mechanism;

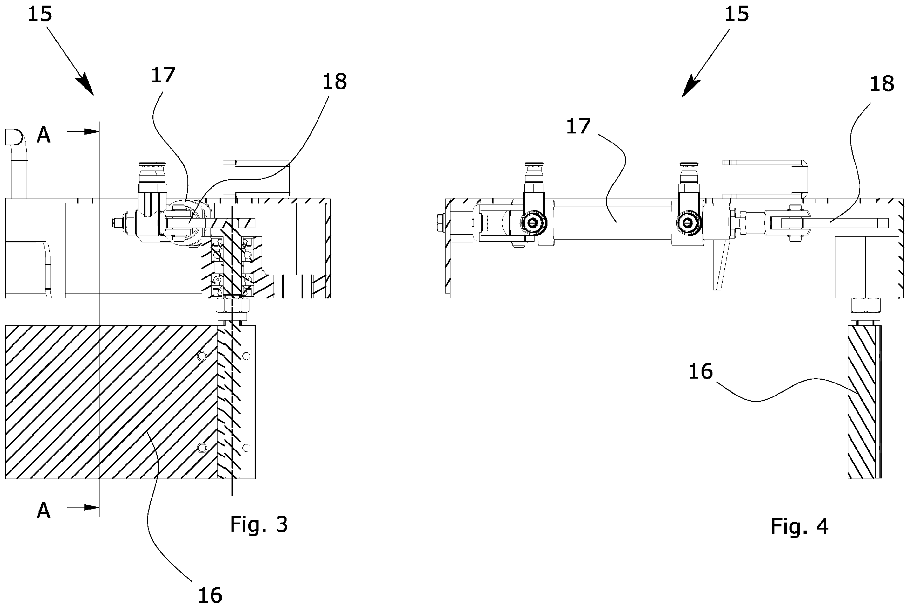

- figure 3 represents a schematic view with the detail of the mechanical blade fixing unit;
- figure 4 represents a schematic sectional view according to the cutting line A-A of figure 3.

### DESCRIPTION OF AN EMBODIMENT OF THE INVENTION

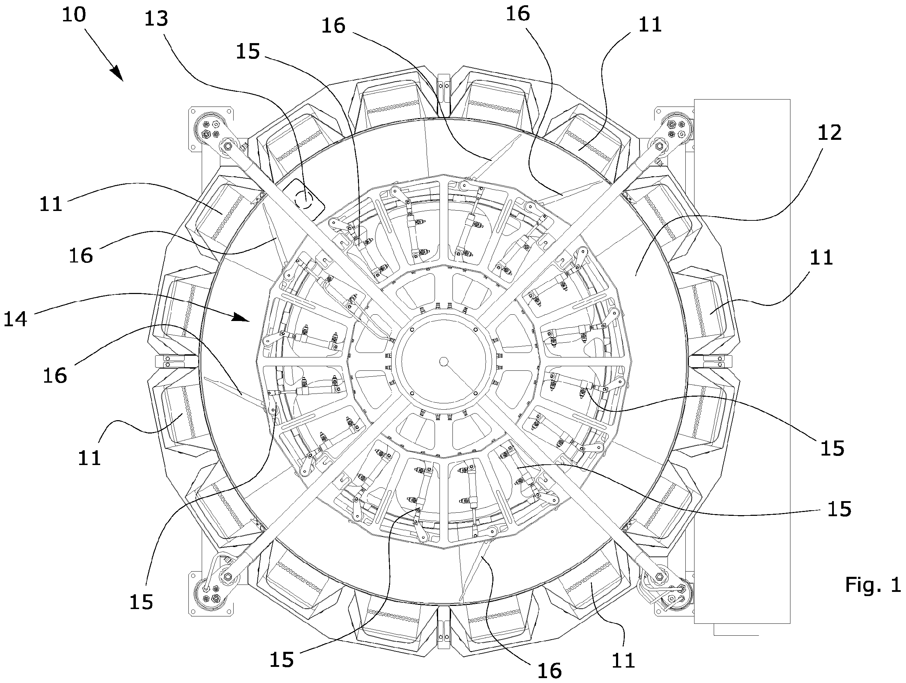

With reference to the appended figures, and initially in particular to figure 1, 10 generally indicates a dosing machine equipped with the dosing device according to the invention for the weighing of food products or the like, to be packaged.

The dosing machine 10 which makes use of the device according to the invention has a substantially carousel-shaped form extending vertically, and is equipped with a multitude of dosing heads 11 positioned in a circular fashion outside a large rotatable plate 12 which, during normal production, rotates at low speed.

The product to be dosed comes from supply devices placed upstream of the production line through, but not exclusively, relevant conveyor belts that see to transporting it to the doser.

These belts, of which there may be one or more than one, see to unloading the product or pieces to be dosed in a uniform way into the outermost part of the large rotatable plate 12.

In this way, a succession of food portions is created on the outermost part of the rotatable plate 12, arranged in a circular sense and uniformly separated.

A first characteristic of the invention comes from the presence of a scanner 13 designed for measuring the size or volume of the pieces, which covers the most peripheral part of the rotatable plate, in such a way as to measure the dimensions of the pieces positioned on the disc whilst they pass beneath it.

The scanner passes the information to a computerised control system which, through mathematical algorithms, calculates the volume of all the pieces and remembers their position on the rotatable disc.

A further characteristic of the invention comes from the fact that above the rotatable plate 12 there is a frame 14, also of the carousel type, with a diameter less than the plate 12, firmly anchored to the framework of the machine, which supports a plurality of kinematically connected mechanical linkages 15, which allow the movement of a respective plurality of blades 16, each of which is positioned at a respective dosing head.

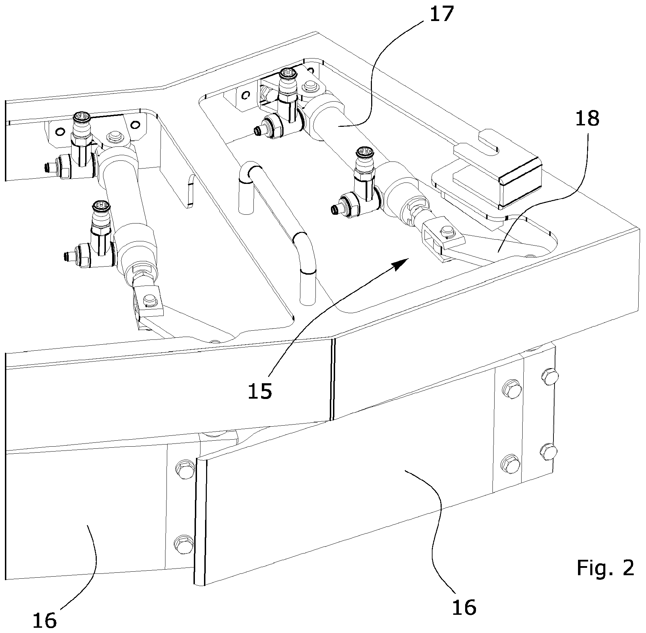

The blades 16 are hinged on the vertical axis which constitutes the rotation pin and are driven by the respective kinematic mechanisms 15 each of which consists of a piston 17 connected to a lever 18, as can be seen in figure 2.

The blades 16 driven by the kinematic mechanisms 15 are able to move angularly from a position recessed in the carousel to a protruding pushing position on the plate 12 where the portions are positioned, which are in this way pushed towards the dosers driven by the centralised computerised control system that handles them during the operation of the machine.

During the rotation of the carousel, the blades 16 are driven with respect to the weighing heads, and their movement pushes the product which is positioned on the rotatable plate 12 at the respective weighing heads inside the corresponding containment bucket.

This mechanism allows the dosing heads to be filled with the right amount of product and, if the scanner is also present, also the dimensions of the pieces to be dosed to be checked, hence having the possibility to select the pieces not only based on the weight, but also based on the measurements or volume.

This pushing device through blades 16 is handled by a centralised computerised control system which, through the weighing bucket contained in the heads, detects how much weight it contains and, if available, through the scanner, also detects the dimensions and therefore also the volume of the pieces in the heads.

Through the calculation of the possible combinations, the centralised management system can decide which buckets to open to make their contents fall and convey them to form the dose that is to fill the sealed package realised by the packaging machine below.

As it is possible to note, the objects indicated in the preamble have been reached since the weighing and dosing machine according to the invention simultaneously allows the speed and high productivity requirements of the market to be satisfied also with products characterised by notable internal elasticity and glueyness, or stickiness, such as raw meat, fish, soft cheeses, or other similar products.

## Claims

1. A filling device for multi-head dosing machines (10) designed for the weighing and dosing of food products, or the like, to be packaged, having a substantially carousel-shaped form extending vertically and comprising a multitude of dosing heads (11) **characterised in that** the dosing heads (11) are positioned in a circular fashion outside a rotatable plate (12) on which are positioned the portions, above which is positioned a frame (14) which is also of the carousel type with a diameter less than the plate (12), comprising a plurality of mechanical linkages (15) connected by a kinematic mechanism to a respective plurality of movable blades (16), each of which is positioned at a respective dosing head (11), allowing the blades (16) to move angularly and push the product to said respective dosing head (11).

2. The filling device for multi-head dosing machines (10) according to the preceding claim, **characterised by** the presence of a scanner (13) designed for measuring the size or volume of the pieces, which covers the more peripheral part of the rotatable plate (12), that is, in the transit zone of the portions placed thereon, in such a way as to measure their dimensions whilst they pass beneath.

3. The filling device for multi-head dosing machines (10) according to the main claim, **characterised in that** the blades (16) are hinged on the vertical axis of the carousel and are driven by the respective kinematic mechanisms (15) each of which consists of a piston (17) connected to a lever (18).

4. The filling device for multi-head dosing machines (10) according to the preceding claim, **characterised in that** the blades (16) driven by the kinematic mechanisms (15) are able to move angularly from a position recessed in the frame (14) to a pushing position protruding from it towards the plate (12) where the portions are positioned, which at the appropriate moment are in this way pushed towards the dosing devices of the machine.

5. The filling device for multi-head dosing machines (10) according to any one of the preceding claims, **characterised in that** the movement of the blades (16) imparted by the kinematic mechanisms (15) is controlled by a centralised computerised control system.

## Patentansprüche

1. Füllvorrichtung für Mehrkopfzumessmaschinen (10), ausgelegt zum Abwiegen und Zumessen von Nahrungsmittelprodukten oder dergleichen, die verpackt werden sollen, aufweisend eine im Wesentlichen karussellartige Form, die vertikal verläuft, und umfassend mehrere Zumessköpfe (11), **dadurch gekennzeichnet, dass** die Zumessköpfe (11) auf kreisförmige Art und Weise außerhalb einer drehbaren Platte (12), auf der die Portionen angeordnet werden, angeordnet sind, über welcher ein Rahmen (14) angeordnet ist, der ebenfalls von der Karussellart ist, mit einem Durchmesser, der geringer als die Platte (12) ist, umfassend mehrere mechanische Verbindungen (15), die durch einen kinematischen Mechanismus mit jeweiligen mehreren beweglichen Blättern (16) verbunden sind, von denen jedes an einem jeweiligen Zumesskopf (11) angeordnet ist, wodurch ermöglicht ist, dass sich die Blätter (16) winklig bewegen und das Produkt zum jeweiligen Zumesskopf (11) schieben.

2. Füllvorrichtung für Mehrkopfzumessmaschinen (10) gemäß dem vorhergehenden Anspruch, **gekennzeichnet durch** das Vorhandensein eines Scanners (13), der zum Messen der Größe oder des Volumens der Stücke ausgelegt ist und den weiter peripheren Teil der drehbaren Platte (12) abdeckt, d.h. in der Transitzone der darauf angeordneten Portionen, um solcherart ihre Abmessungen zu messen, während sie darunter durchlaufen.

3. Füllvorrichtung für Mehrkopfzumessmaschinen (10) gemäß dem Hauptanspruch, **dadurch gekennzeichnet, dass** die Blätter (16) auf der Vertikalachse des Karussells angelenkt sind und durch die jeweiligen kinematischen Mechanismen (15) angetrieben werden, die jeder aus einem Kolben (17), der mit einem Hebel (18) verbunden ist, bestehen.

4. Füllvorrichtung für Mehrkopfzumessmaschinen (10) gemäß dem vorhergehenden Anspruch, **dadurch gekennzeichnet, dass** die Blätter (16), die durch die kinematischen Mechanismen (15) angetrieben werden, dazu imstande sind, sich winklig aus einer Position, die im Rahmen (14) ausgespart ist, zu einer Schiebeposition, die davon vorragt, zur Platte (12) hin zu bewegen, auf der die Portionen angeordnet sind, welche zum gegebenen Zeitpunkt solcherart zu den Zumessvorrichtungen der Maschine hin geschoben werden.

5. Füllvorrichtung für Mehrkopfzumessmaschinen (10) gemäß einem der vorhergehenden Ansprüche, **dadurch gekennzeichnet, dass** die Bewegung der Blätter (16), die durch die kinematischen Mechanismen (15) vermittelt wird, durch ein zentralisiertes rechnergestütztes Steuersystem gesteuert wird.

## Revendications

1. Dispositif de remplissage pour des machines de dosage multi-têtes (10) conçues pour peser et doser des produits alimentaires ou analogues à emballer, ayant sensiblement une forme de carrousel s'étendant verticalement et comprenant une multitude de têtes de dosage (11), **caractérisé en ce que** les têtes de dosage (11) sont positionnées de manière circulaire à l'extérieur d'une plaque rotative (12) sur laquelle sont positionnées les parties au-dessus desquelles est positionné un cadre (14), également du type carrousel dont le diamètre est inférieur à celui de la plaque (12), comprenant une pluralité de liaisons mécaniques (15) reliées par un mécanisme cinématique à une pluralité respective de lames mobiles (16), chacune d'elles est positionnée au niveau d'une tête de dosage respective (11), ce qui permet aux lames (16) de se déplacer angulairement et de pousser le produit vers ladite tête de dosage respective (11).

2. Dispositif de remplissage pour des machines de dosage multi-têtes (10) selon la revendication précédente, **caractérisé par** la présence d'un scanner (13) destiné à mesurer la taille ou le volume des pièces et qui couvre la partie la plus périphérique de la plaque rotative (12), c'est-à-dire dans la zone de transit des parties qui y sont placées, de manière à mesurer leurs dimensions lorsqu'elles passent au-dessous.

3. Dispositif de remplissage pour des machines de dosage multi-têtes (10) selon la revendication principale, **caractérisée en ce que** les lames (16) sont articulées sur l'axe vertical du carrousel et sont entraînées par les mécanismes cinématiques respectifs (15), chacun d'eux consiste en un piston (17) relié à un levier (18).

4. Dispositif de remplissage pour des machines de dosage multi-têtes (10) selon la revendication précédente, **caractérisé en ce que** les lames (16) entraînées par les mécanismes cinématiques (15) peuvent se déplacer angulairement depuis une position en retrait dans le cadre (14) vers une position de poussée saillant de celui-ci en direction de la plaque (12) où sont positionnées les parties qui sont ainsi poussées en direction des dispositifs de dosage de la machine au moment opportun.

5. Dispositif de remplissage pour des machines de dosage multi-têtes (10) selon l'une des revendications précédentes, **caractérisé en ce que** le mouvement des lames (16) communiqué par les mécanismes cinématiques (15) est commandé par un système de commandé informatisé centralisé.
